# EUROPÄISCHE PATENTSCHRIFT

(11) **EP 1 115 955 B1**
(45) Veröffentlichungstag und Bekanntmachung des Hinweises auf die Patenterteilung: **03.07.2002**
(21) Anmeldenummer: 99948787.9
(22) Anmeldetag: 18.09.1999
(51) Int. Cl.: E04B 2/74

(54) **VERBINDUNGSELEMENT ZUR VERBINDUNG ZWEIER KOMPONENTEN EINER TRENNWAND SOWIE VERWENDUNG EINES DERARTIGEN VERBINDUNGSELEMENTS**
CONNECTING ELEMENT FOR CONNECTING TWO COMPONENTS OF A PARTITION WALL AND UTILIZATION OF SAID CONNECTING ELEMENT
ELEMENT DESTINE A LA LIAISON DE DEUX PARTIES D'UNE CLOISON DE SEPARATION, ET UTILISATION DUDIT ELEMENT

(30) Priorität: 25.09.1998 DE 19844027
(43) Veröffentlichungstag der Anmeldung: 18.07.2001
(73) Patentinhaber: PREFORM Holding d.o.o., 1260 Ljubljana-Polje (SI)
(72) Erfinder: AUER, Karl-Heinz, D-91596 Burk (DE); LIEBRICH, Nicole, D-73433 Aalen (DE)
(74) Vertreter: Grättinger & Partner (GbR)
(86) Internationale Anmeldenummer: EP9906923
(87) Internationale Veröffentlichungsnummer: WO0019034

(56) Entgegenhaltungen:
- DE-A- 3 719 588
- US-A- 4 493 172
- US-A- 4 785 565
- US-A- 5 531 539

## Beschreibung

Die vorliegende Erfindung betrifft ein Verbindungselement zur Verbindung zweier Komponenten einer Trennwand, umfassend zwei über einen Verbindungssteg miteinander verbundene Klemmflansche. Darüber hinaus betrifft die vorliegende Erfindung die Verwendung eines derartigen Verbindungslements zur Verbindung eines Wandelements einer Trennwand mit einer Säule oder zur Verbindung zweier Wandelemente einer Trennwand miteinander.

Es besteht eine geradezu unüberschaubare Fülle unterschiedlicher Trennwände, die jeweils aus vorgefertigten Komponenten (Wandelementen und ggfs. Säulen) zusammengefügt werden. Die große Anzahl unterschiedlicher Systeme ist dabei in erster Linie eine Folge davon, daß derartige Trennwände für den Einsatz in den unterschiedlichsten Anwendungen bestimmt sind. Ein typischer Anwendungsbereich ist die Untergliederung von Großraumbüros in einzelne Zonen, seien es offene Bereiche oder aber geschlossene Zellen, beispielsweise Besprechungsräume. Auch zur Abschirmung einzelner Arbeitsplätze, beispielsweise gegen Sicht und/oder unerwünschten Lichteinfall kommen derartige Trennwände zum Einsatz. Weit verbreitet ist der Einsatz derartige Trennwände darüber hinaus im Bereich von Ausstellungen und Messen.

Die Verbindung der einzelnen Komponenten der Trennwand untereinander kann dabei auf verschiedene Weise erfolgen. Bekannt sind insbesondere die Verbindung mittels Klettmaterials (z.B. CH-632034-A5, FR-2570408-A1, DE-4207644-A1), mittels magnetischer Kräfte (z.B. DE-9218938-U1, EP-087723-A2, EP-0178504-A1), mittels an den Wandelementen vorgesehener Haken (z.B. DE-7222826-U1) oder mittels mechanischer Verbindungselemente der eingangs genannten Art. Im Zusammenhang mit der zuletzt genannten Art der Verbindung der Trennwandkomponenten miteinander bilden insbesondere die US-4232724-A, die US-4777777-A, die FR-2479306-A1, die GB-2051916-A und die WO-95/28532 einen einschlägigen Stand der Technik. Alle diese Dokumente betreffen allerdings ausschließlich die Verbindung zweier Wandelemente untereinander mittels der eingangs angegebenen Verbindungselemente. Die Verbindung von Wandelementen mit Säulen ist demgegenüber nicht vorgesehen.

Auch die US-5531539-A beschreibt die Verwendung von Verbindungselementen der eingangs genannten Art zur Verbindung zweier Komponenten einer Trennwand. Das entsprechende Verbindungselement weist dabei zwei prismatische Klemmflansche mit dreieckigem Querschnitt auf; es läßt sich sowohl zur starren Verbindung zweier zueinander fluchtender Wandelemente untereinander als auch zur starren Verbindung eines Wandelements mit einer Säule einsetzen.

Die vorliegende Erfindung zielt ab auf eine Steigerung der Flexibilität hinsichtlich der Gestaltung und der Einsatzmöglichkeiten von Trennwänden, bei denen die einzelnen Komponenten unter Verwendung der eingangs angegebenen Verbindungslemente miteinander verbunden werden, bei einer größtmöglichen Anzahl von Gleichteilen. Das zuletzt genannte Kriterium ist dabei vor dem Hintergrund möglichst geringer Herstell- und Lagerhaltungskosten von Bedeutung.

Gemäß der vorliegenden Erfindung ist zur Lösung dieser Aufgabe vorgesehen, daß das Verbindungselement asymmetrisch ausgebildet ist, indem die beiden Klemmflansche unterschiedlich gestaltete Querschnitte aufweisen, wobei die Kontur eines ersten Klemmflansches zumindest bereichsweise unrund und die Kontur des anderen, zweiten Klemmflansches zumindest bereichsweise rund ist. Das im Rahmen der vorliegenden Erfindung zum Einsatz kommende Verbindungselement weist somit einen asymmetrischen Aufbau auf dergestalt, daß die beiden Verbindungsflansche über einen unterschiedlichen Querschnitt verfügen. Einer der beiden Klemmflansche verfügt dabei um eine zumindest bereichsweise runde Kontur; dies ist wesentlich für eine Verschwenkbarkeit dieses - im folgenden verkürzt als "rund" bezeichneten - Klemmflansches in einer korrespondierenden Nut einer Trennwandkomponente, in der dieser Klemmflansch aufgenommen ist. Der andere Klemmflansch verfügt über eine zumindest bereichsweise unrunde Kontur; dies ist wiederum wesentlich für eine nicht-verschwenkbare, formschlüssige, drehfeste Aufnahme dieses - im folgenden verkürzt als "unrund" bezeichneten - Klemmflansches in einer korrespondierenden Nut einer zweiten Trennwandkomponente, die unter Verwendung des erfindungsgemäßen Verbindungselements mit der ersten Trennwandkomponente zu verbinden ist.

Nur zur Klarstellung sei darauf hingewiesen, daß der Übergangsbereich, in dem jeder der Klemmflansche in den Verbindungssteg übergeht, weder als "rund" noch als "unrund" im Sinne der vorliegenden Erfindung anzusehen ist; er bleibt vielmehr bei der Bestimmung der Querschnittsform der Klemmflansche außer Betracht.

Wie sich aus den nachstehenden Erläuterungen der vorliegenden Erfindung ergibt, ist die erfindungsgemäße, vorstehend erläuterte Gestaltung des Verbindungselements von zentraler Bedeutung dafür, daß dieses in gleicher Weise zur Verbindung zweier Wandelemente miteinander wie auch zur Verbindung eines Wandelements mit einer - insbesondere im Bereich einer Eckverbindung vorgesehenen - Säule verwendet werden kann, wobei sich gerade im Zusammenhang mit der Wandelement-Säule-Verbindung die Erfindung durch ein bisher nicht bekanntes Maß an Flexibilität hinsichtlich der Gestaltung der Trennwand auszeichnet. Bei der Verwendung des erfindungsgemäßen Verbindungselements zur Verbindung eines Wandelements einer Trennwand mit einer Säule ist nämlich der unrunde Klemmflansch des Verbindungselements formschlüssig, drehfest in einer Nut der Säule aufgenommen, während der runde Klemmflansch des Verbindungselements innerhalb eines vorgegebenen Winkelbereichs um seine Längsachse herum verschwenkbar in einer Nut eines randseitig an dem Wandelement vorgesehenen Verbindungsprofils aufgenommen ist. Die formschlüssige, drehfeste Aufnahme des unrunden Klemmflansches des Verbindungselements in einer Nut der Säule führt zu einer eindeutigen Fixierung des Verbindungselements an der Säule in einer vorgegebenen definierten Stellung. Demgegenüber führt die innerhalb eines vorgegebenen Winkelbereichs um seine Längsachse herum verschwenkbare Aufnahme des runden Klemmflansches des Verbindungselements in einer Nut eines Verbindungsprofils des Wandelements zu innerhalb dieses Winkelbereichs beliebigen, stufenlos einstellbaren Stellungen des Wandelements zur Säule. In diesem Zusammenhang ist von Bedeutung, daß zur Verbindung eines Wandelements mit einer Säule nur ein, ggfs. aus mehreren axial in Reihe angeordneten Segmenten bestehendes Verbindungselement vorgesehen ist, um die Verschwenkbarkeit des Wandelements um die Achse des runden Klemmflansches des Verbindungselements herum zu ermöglichen. Indem der unrunde Klemmflansch formschlüssig, drehfest in einer Nut der Säule aufgenommen ist, wodurch, wie dargelegt, die Stellung des Verbindungselements zur Säule eindeutig vorgegeben ist, kann die im Bereich der Oberfläche der Säule vorgesehene Öffnung der Nut besonders schmal ausgeführt sein; die lichte Weite der Öffnung der Nut braucht nur geringfügig größer zu sein als die Dicke des Verbindungssteges des Verbindungselements. Dies ist von Bedeutung insbesondere im Zusammenhang mit dem optischen Erscheinungsbild der Säule; denn diese erhält auf diese Weise auch bei einer größeren Anzahl von über um den Umfang verteilt angeordneten Nuten einen Säulencharakter mit einer relativ geschlossenen Oberfläche.

Die Nut des vorstehend erläuterten Verbindungsprofils des Wandelements ist dabei derart ausgestaltet, daß sie nicht nur - innerhalb eines vorgegebenen Winkelbereiches um dessen Längsachse herum verschwenkbar - den runden Klemmflansch des Verbindungselements aufnehmen kann, sondern darüber hinaus zur nichtverschwenkbaren, formschlüssigen, drehfesten Aufnahme des unrunden Klemmflansches des Verbindungselements geeignet ist. Diese Doppelfunktion der Nut ist von maßgeblicher Bedeutung im Hinblick auf den Einsatz des erfindungsgemäßen Verbindungselements zur Verbindung zweier gleichartiger Wandelemente miteinander. Denn indem das Verbindungselement mit seinem unrunden Klemmflansch formschlüssig, drehfest in der Nut des Verbindungsprofils des einen Wandelements aufgenommen ist, ist ausgeschlossen, daß zwei direkt miteinander verkettete Wandelemente einen seitlichen Versatz zueinander aufweisen. Durch geeignete zusätzliche Mittel (z.B. Anschläge) läßt sich darüber hinaus ein Winkelversatz ausschließen mit dem Ergebnis, daß zwei unter Einsatz des erfindungsgemäßen Verbindungselements direkt miteinander verkettete Wandelemente ohne Verwendung weiterer Einrichtungen exakt zueinander fluchten.

Die vorliegende Erfindung ermöglicht somit, daß ein und dasselbe Verbindungselement zur Verbindung eines Wandelements einer Trennwand sowohl mit einem identisch aufgebauten weiteren Wandelement wie auch mit einer Säule eingesetzt werden kann, wobei bei der Wandelement-Wandelement-Verbindung die beiden miteinander verketteten Wandelemente insbesondere eine fest vorgegebene, zueinander fluchtende Stellung einnehmen können, während die Wandelement-Säule-Verbindung ein erhebliches Maß an Gestaltungsspielraum beinhaltet, indem die Stellung des Wandelements zu der Säule innerhalb eines vorgegebenen Winkelbereichs stufenlos einstellbar ist. Sowohl vom Wandelement wie auch vom Verbindungselement genügt somit zur Herstellung unterschiedlichst aufgebauter Trennwände jeweils ein einziger Typ.

Im Rahmen der vorliegenden Erfindung kann der verkürzt als "unrund" bezeichnete Klemmflansch, dessen Kontur zumindest bereichsweise unrund ist, durchaus bereichsweise eine gekrümmte Oberfläche aufweisen. So ist im Rahmen der vorliegenden Erfindung als "unrund" beispielsweise auch ein solcher Klemmflansch von kreiszylindrischer Grundform anzusehen, von dem eine Rippe vorspringt, welche - zur formschlüssigen, drehfesten Aufnahme dieses Klemmflansches in einer Nut des Verbindungsprofils des Wandelements oder aber einer Säule - in eine korrespondierende Aussparung der betreffenden Nut eingreift. Umgekehrt kann der verkürzt als "rund" bezeichnete Klemmflansch, dessen Kontur zumindest bereichsweise rund ist, abgeflacht sein oder aber auch eine Rippe aufweisen, soweit dies innerhalb des vorgegebenen Winkelbereichs der Verschwenkbarkeit dieses Klemmflansches um seine Längsachse herum in einer Nut des Verbindungsprofils des Wandelements nicht entgegensteht.

Eine erste bevorzugte Weiterbildung der Erfindung zeichnet sich dadurch aus, daß der erste, unrunde Klemmflansch des Verbindungselements einen polygonalen Querschnitt aufweist. Besonders bevorzugt ist der erste, unrunde Klemmflansch dabei von rechteckiger Grundform, wobei die Ecken zumindest teilweise abgeschrägt sein können. Hierdurch ergibt sich eine hammerförmige Gestaltung des unrunden Klemmflansches.

Gemäß einer anderen Weiterbildung der Erfindung ist der zweite, runde Klemmflansch geschlitzt. Besonders bevorzugt weist er dabei einen von zwei federnden Wangen begrenzten zylindrischen Hohlraum auf. Der Schlitz bzw. der zylindrische Hohlraum des runden Klemmflansches dient dabei der Aufnahme eines Spreizelements. Mit diesem läßt sich der runde Klemmflansch zur festen Anlage an der Innenwand der betreffenden Nut des Verbindungsprofils des zugeordneten Wandelements spreizen, um Verbindungselement und Wandelement in der gewünschten Stellung zueinander kraftschlüssig zu fixieren. Das Spreizelement kann dabei insbesondere als verdrehbarer Exzenter ausgebildet sein. Besonders zweckmäßig ist dabei, wenn die Verdrehbarkeit des Exzenters durch zwei Anschläge begrenzt ist, wobei der eine Anschlag die Stellung minimaler Spreizung des betreffenden Klemmflansches definiert und der andere Anschlag die Stellung maximaler Spreizung.

Eine besonders bevorzugte Weiterbildung des erfindungsgemäßen Verbindungselements, dessen runder Klemmflansch geschlitzt ist, zeichnet sich dadurch aus, daß die lichte Weite des Schlitzes mindestens ebenso groß ist wie die Differenz zwischen dem Durchmesser des runden Klemmflansches und der lichten Weite der Öffnung der Nut des Verbindungsprofils des Wandelements. Bei einer derartigen Abstimmung des runden Klemmflansches des Verbindungselements einerseits und der Nut des Verbindungsprofils des Wandelements andererseits kann der runde Klemmflansch um ein solches Maß zusammengedrückt werden, daß er durch die seitliche Öffnung der Nut in diese eingesetzt werden kann. Auf diese Weise läßt sich beim Aufbau der Trennwand ein axiales Einführen des Verbindungselements mit seinem runden Klemmflansch in die entsprechende Nut des Verbindungsprofils des Wandelements vermeiden. Letzteres läßt sich vielmehr seitlich auf den runden Klemmflansch des Verbindungselements, welches mit seinem unrunden Klemmflansch in eine Nut eines weiteren Wandelements oder einer Säule eingesetzt ist, aufclipsen. Dies ist von besonderem Vorteil im Hinblick auf eine nachträgliche Umgestaltung einer bereits aufgebauten Trennwand; denn auf diese Weise läßt sich eine bestehende Trennwand beliebig um weitere Wandelemente ergänzen, ohne zuvor abgebaut bzw. zerlegt werden zu müssen. Erst dann, wenn das Wandelement auf den runden Klemmflansch des Verbindungselements aufgeclipst worden ist, wird das Spreizelement in den runden Klemmflansch zu dessen Spreizung eingesetzt, um ein seitliches Abziehen des Wandelements von dem Verbindungselement zu verhindern und ggfs. zusätzlich für eine Fixierung des zwischen dem Wandelement und dem Verbindungselement eingestellten Winkels zu sorgen.

Die im Rahmen der vorliegenden Erfindung einsetzbare Säule weist bevorzugt eine Mehrzahl übereinstimmender Nuten auf, welche mit einer Teilung von 45° über den Umfang der Säule verteilt angeordnet sind. In diesem Falle beträgt der vorgegebene Winkelbereich, innerhalb dessen der runde Klemmflansch um seine Längsachse herum in einer Nut des Verbindungsprofils des Wandelements verschwenkbar ist, besonders bevorzugt ± 15°. Jede der Grundstellungen zweier an der betreffenden Säule angeschlossener Wandelemente zueinander (90°, 135°, 180°) läßt sich in diesem Falle durch das bei beiden Wandelementen bestehende Spiel von ± 15° um jeweils insgesamt 30° vergrößern und verkleinern; dies bedeutet, daß die beiden an der Säule angeschlossenen Wandelemente in diesem Falle jedem beliebigen Winkel zueinander einnehmen können. Bestimmte Winkelstellungen (z.B. 120°) sind dabei sogar auf doppelte Weise zu erreichen, nämlich durch Vergrößerung der 90°-Grundstellung um zweimal 15° wie auch durch Verkleinerung der 135°-Grundstellung beispielsweise um einmal 15°.

Eine wiederum andere Weiterbildung der Erfindung zeichnet sich dadurch aus, daß die Säule auf ihrer Außenfläche beidseits der Öffnung jeder Nut nach außen vorspringende Rippen aufweist. Diese Rippen unterbinden den Lichtdurchtritt zwischen der Säule und dem Verbindungsprofil des Wandelements, wenn, wie es einer bevorzugten Weiterbildung der Erfindung entspricht, zur Verbindung des Wandelements mit der Säule nicht ein durchgehendes Verbindungselement vorgesehen ist, sondern vielmehr ein in mehrere, mit axialem Abstand zueinander angeordnete Segmente unterteiltes Verbindungselement.

Eine wiederum andere bevorzugte Weiterbildung der Erfindung zeichnet sich dadurch aus, daß das Verbindungsprofil auf seiner der Säule zugewandten Seite beidseits der Nut konkav gekrümmte Anlageflächen aufweist. Die Krümmung der Anlageflächen entspricht dabei im wesentlichen der Krümmung der Oberfläche der Säule zwischen jeweils zwei Nuten. Der vorgegebene Winkelbereich, innerhalb dessen das Wandelement um die Längsachse des runden Klemmflansches herum verschwenkbar ist, wird dabei durch Anliegen einer der beiden Anlageflächen an der Oberfläche der Säule begrenzt. Durch die flächige Anlage wird dabei eine Beschädigung der Säule und/oder des Verbindungsprofils vermieden.

Sofern die Säule auf ihrer Außenfläche beidseits der Öffnungen der Nuten nach außen vorspringende Rippen aufweist (sh. oben), so weist auch das Verbindungsprofil in dem Übergangsbereich von der Nut zu den Anlageflächen korrespondierende Aussparungen für die Rippen auf. Ist das Wandelement in eine seiner Endstellungen verschwenkt, so tritt eine der Rippen der Säule in die korrespondierende Aussparung des Verbindungsprofils des Wandelements ein.

Weiter oben wurde bereits darauf hingewiesen, daß es im Hinblick auf die Flexibilität hinsichtlich der Gestaltung der Trennwand von Bedeutung ist, daß die Verbindung eines Wandelements mit einer Säule über lediglich ein (ggfs. in mehrere Segmente unterteiltes) Verbindungselement erfolgt. Auch die Verbindung zweier Wandelemente miteinander erfolgt in entsprechender Weise über lediglich ein (ggfs. in mehrere Segmente unterteiltes) Verbindungselement. Das Verbindungselement kann auf diese Weise im Bereich der Mittelachse der miteinander verbundenen Wandelemente angeordnet sein. Dies gestattet wiederum, daß, gemäß einer bevorzugten Weiterbildung der Erfindung, die Erstreckung der Verbindungsprofile der Wandelemente quer zur Mittelachse erheblich geringer ist als die Dicke der Wandkörper der Wandelemente. Auf diese Weise entsteht im Bereich der Verbindung zweier Wandelemente miteinander eine Schattenfuge, die im Bedarfsfalle - mit einer Abdeckung verschlossen - zur Kabelführung eingesetzt werden kann.

Das Verbindungsprofil des Wandelements weist gemäß einer wiederum anderen bevorzugten Weiterbildung der Erfindung zwei seitlich angeordnete kreuzförmigen Nuten auf. In diese lassen sich insbesondere Lochschienen einsetzen, die der Befestigung von Accessoires an dem betreffenden Wandelement dienen. In entsprechender Weise können die Nuten der Säule zusätzliche Aussparungen aufweisen, in welche ebenfalls Lochschienen eingesetzt werden können. Auf diese Weise lassen sich auch an der Säule Accessoires befestigen.

Schließlich kann gemäß einer Weiterbildung der Erfindung vorgesehen sein, daß das Verbindungsprofil eine axiale Vielzweckbohrung aufweist. Diese kann insbesondere - an der Unterkante der Trennwand - der Befestigung eines Fußes dienen. Ferner ist eine derartige Vielzweckbohrung einsetzbar zur Aufnahme eines Verbindungsbolzens, der der Verbindung zweier übereinander angeordneter Wandelemente miteinander dient.

Im Folgenden wird die vorliegende Erfindung unter Bezugnahme auf die anliegende Zeichnung näher erläutert. Dabei veranschaulichen
Fig. 1 bis 3 die Verbindung eines Wandelements mit einer Säule unter Verwendung einer ersten bevorzugten Ausführungsform des erfindungsgemäßen Verbindungselements;
Fig. 4 veranschaulicht die lineare Verbindung zweier identischer Wandelemente des in den Fig. 1 bis 3 dargestellten Typs miteinander unter Verwendung des ebenfalls in den Fig. 1 bis 3 dargestellten Verbindungselements; die
Fig. 5 und 6 zeigen die Verwendung einer zweiten bevorzugten Ausführungsform des erfindungsgemäßen Verbindungselements zur Verbindung eines Wandelements mit einer Säule; und
Fig. 7 veranschaulicht die Verwendung einer dritten bevorzugten Ausführungsform des erfindungsgemäßen Verbindungselements zur Verbindung eines Wandelements mit einer Säule.

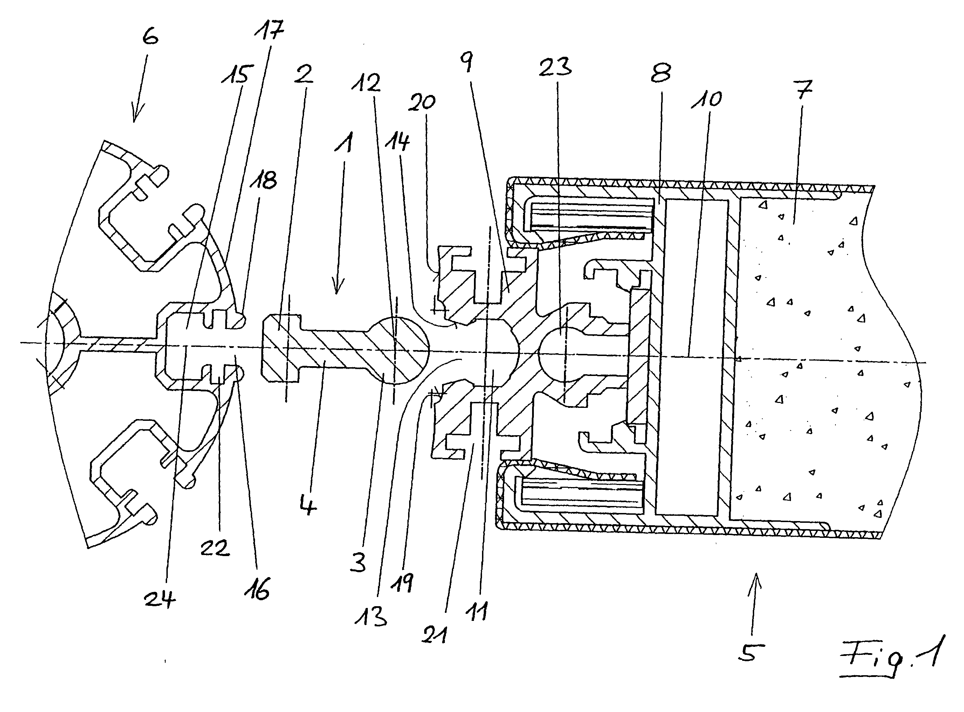

Gemäß den Fig. 1 bis 4 umfaßt das Verbindungselement 1 jeweils einen ersten Klemmflansch 2 und einen zweiten Klemmflansch 3, die über einen Verbindungssteg 4 miteinander verbunden sind. Der erste Klemmflansch 2 ist von rechteckiger Grundform, wobei die beiden nach außen weisenden Kanten zur Bildung eines hammerförmigen Querschnitts abgeflacht sind. Der zweite Klemmflansch 3 weist einen kreisförmigen Querschnitt auf. Unter Verwendung des Verbindungselements 1 lassen sich, wie dies in den Fig. 1 bis 3 veranschaulicht ist, ein Wandelement 5 und eine Säule 6 einer Trennwand miteinander verbinden. Das Wandelement 5 umfaßt dabei einen Wandkörper 7, ein mit diesem fest verbundenes Rahmenprofil 8 und ein an diesem angebrachtes Verbindungsprofil 9. Bei einer entsprechenden Ausgestaltung des Wandkörpers 7 und des Verbindungsprofils 9 könnte dieses im Rahmen der vorliegenden Erfindung unter Weglassung des Rahmenprofils selbstverständlich auch direkt an dem Wandkörper 7 montiert werden. Die Gestaltung des Wandkörpers 7 und des Rahmenprofils 8 ist für die vorliegende Erfindung nicht bedeutsam; insoweit wird auf eine weitergehende Erläuterung verzichtet.

Das Verbindungsprofil 9 ist von im wesentlichen T-förmiger Grundform. Maßgeblich im Zusammenhang mit der vorliegenden Erfindung ist die Ausgestaltung der in der Mittelebene 10 angeordneten Nut 11. Diese Nut ist sowohl zur Aufnahme des ersten Klemmflansches 2 wie auch des zweiten Klemmflansches 3 des Verbindungselements 1 geeignet. Die Kontur der Nut 11 ergibt sich somit durch Überlagerung der Konturen der beiden Klemmflansche 2 und 3 des Verbindungselements 1. Die Gestaltung und Dimensionierung der beiden Klemmflansche 2 und 3 des Verbindungselements 1 ist dabei so gewählt, daß bei der vorstehend beschriebenen Überlagerung die Kontur der Nut abschnittsweise der Kontur des ersten, unrunden Klemmflansches 2 und abschnittsweise der Kontur des zweiten, runden Klemmflansches 3 entspricht. Das Ergebnis hiervon ist, daß die Nut 11 sowohl zur Aufnahme des ersten Klemmflansches 2 wie auch zur Aufnahme des zweiten Klemmflansches 3 geeignet ist, wobei der zweite Klemmflansch 3 aufgrund seines runden Querschnitts in der Nut 11 um seine Achse 12 drehbar, der erste Klemmflansch hingegen in der Nut 11 drehfest, formschlüssig aufgenommen ist. Das mit seinem zweiten, runden Klemmflansch 3 in der Nut 11 des Verbindungsprofils 9 aufgenommene Verbindungselement 1 kann somit um die Achse 12 herum verschwenkt werden. Der Verschwenkbereich ist dabei begrenzt. Er wird durch die lichte Weite der Öffnung 13 der Nut 11 vorgegeben, und zwar vorliegend zu ± 15°. Die Öffnung 13 der Nut 11 wird dabei durch schräge Anschlagflächen 14 gebildet, die einen Winkel von 30° miteinander einschließen.

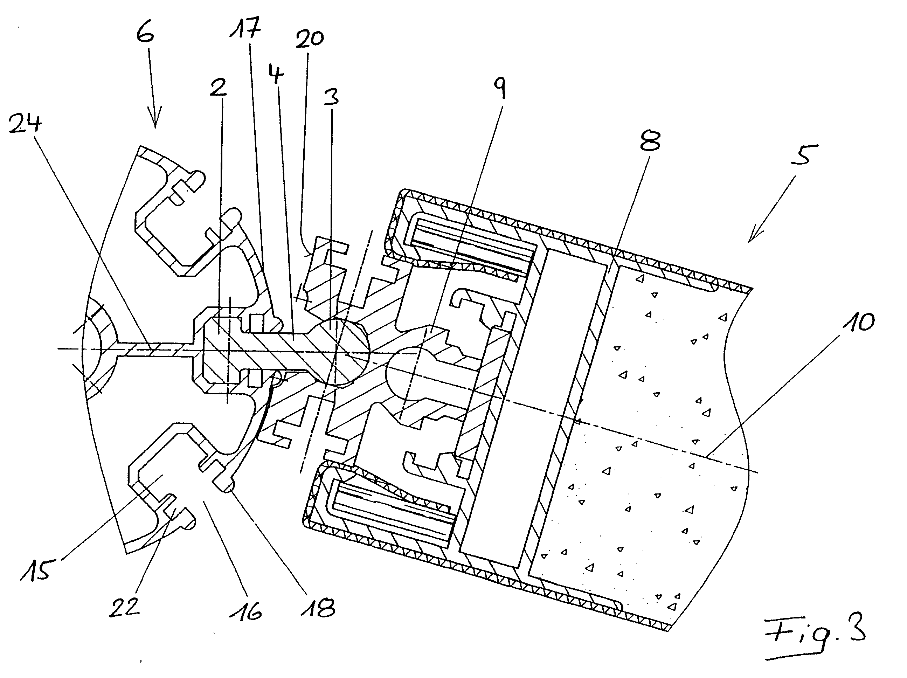

Fig. 3 zeigt, daß die Kontur der Nuten 15 der Säule 6 exakt auf die Kontur des ersten Klemmflansches 2 des Verbindungselements 1 abgestimmt ist. Die Nut 15 der Säule 6 kann somit den ersten Klemmflansch 2 des Verbindungslements 1 formschlüssig, drehfest aufnehmen. Die lichte Weite der Öffnung 16 der Nut 15 ist nur geringfügig größer als die Dicke des Verbindungssteges 4 des Verbindungselements 1.

Die Säule 6 weist auf ihrer Außenfläche 17 beidseits der Öffnung 16 jeder Nut 15 nach außen vorspringende Rippen 18 auf. Korrespondierend zu diesen Rippen weist das Verbindungsprofil 9 benachbart der Öffnung 13 der Nut 11 Aussparungen 19 auf. Die Funktion der Rippen 18 und der Aussparungen 19 wird weiter unten unter Bezugnahme auf Fig. 3 näher erläutert. Dies gilt auch für die konkav gekrümmten Anlageflächen 20 des Verbindungsprofils 9.

Das Verbindungsprofil 9 weist im übrigen zwei zur Seite hin offene kreuzförmige Nuten 21 auf. Diese dienen insbesondere der Aufnahme jeweils einer Lochschiene, an welcher Accessoires an dem betreffenden Wandelement 5 befestigt werden können. In entsprechender Weise sind im Bereich der Nuten 15 der Säule 6 einander gegenüberliegende Aussparungen 22 vorgesehen, die ebenfalls der Aufnahme einer Lochschiene dienen. Schließlich verfügt das Verbindungsprofil 9 über eine Vielzweckbohrung 23, die insbesondere der Befestigung eines Fußes an dem betreffenden Wandelement 5 und der Aufnahme eines der Befestigung eines benachbarten Wandelements dienenden Verbindungsbolzens dient.

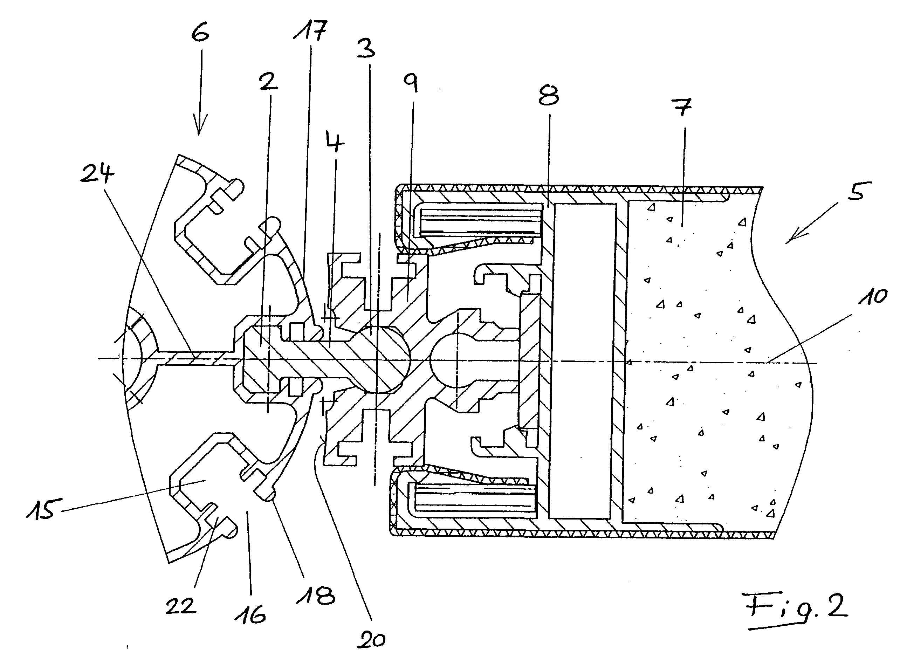

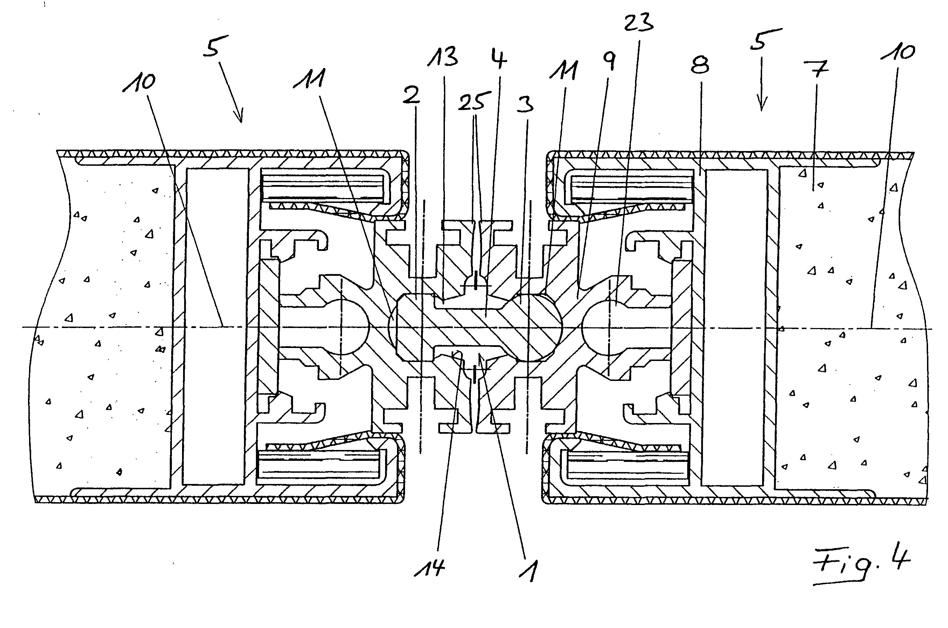

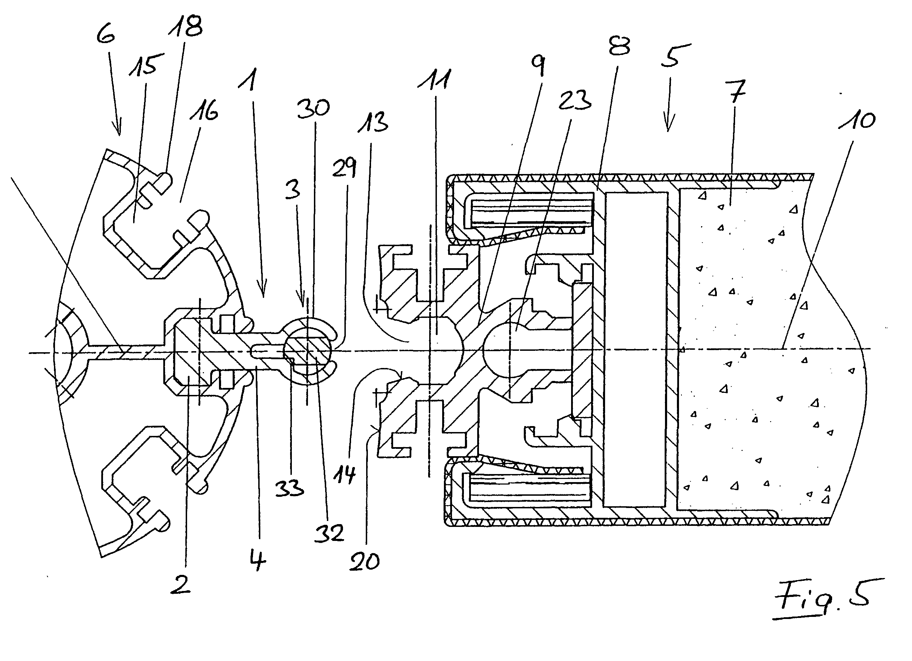

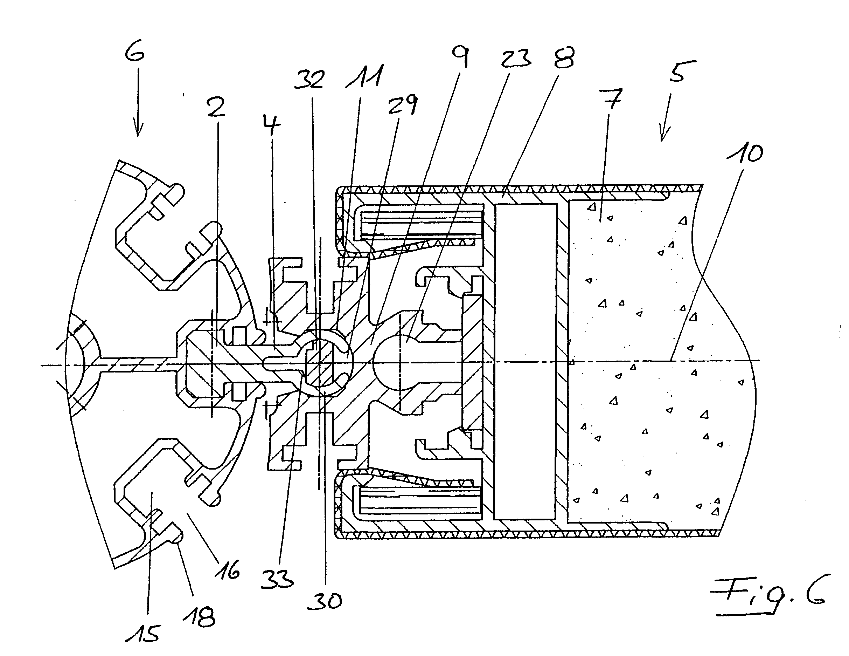

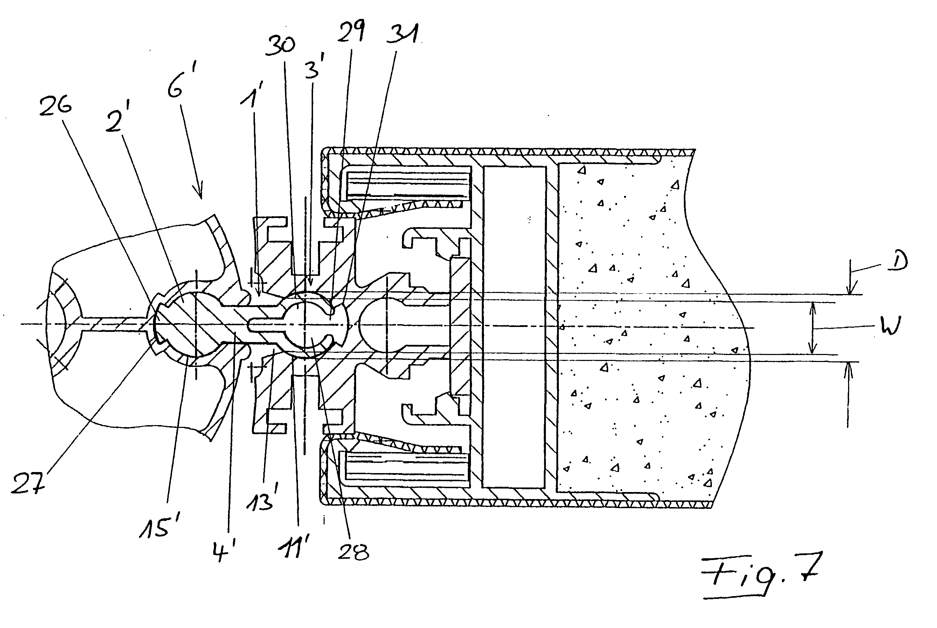

Fig. 2 zeigt die Einheit aus einer Säule 6, einem Wandelement 5 und einem diese beiden Komponenten einer Trennwand miteinander verbindenden Verbindungselement 1. Der erste Klemmflansch 2 des Verbindungselements 1 ist dabei formschlüssig, drehfest in der Nut 15 der Säule 6 aufgenommen. Hingegen sind das Verbindungsglied 1 und das Wandelement 5 bezüglich einander um die Achse 12 des in der Nut 11 des Verbindungsprofils 9 aufgenommenen zweiten Klemmflansches 3 herum verschwenkbar. Das Wandelement 5 kann somit aus der in Fig. 4 gezeigten Stellung, in der die Mittellinie 10 des Wandelements mit der Mittellinie 24 der Nut 15 der Säule 6 fluchtet, heraus verschwenkt werden, und zwar um jeweils 15°.

Fig. 3 zeigt die Situation bei einem in eine seiner beiden Endstellungen verschwenkten Wandelement 5. Hier liegt eine der konkaven Anlageflächen 20 des Verbindungsprofils 9 an der gekrümmten Außenfläche 17 der Säule 6 an; und die benachbarte Rippe 18 der Säule 6 tritt in die zugeordnete Aussparung 19 des Verbindungsprofils 9 ein. Auch liegt die eine der Anschlagflächen 14 an dem Verbindungssteg 4 des Verbindungselements 1 an. Auf diese Weise ist der zum Verschwenken des Wandelements 5 zur Verfügung stehende Winkelbereich durch mehrere zusammenwirkende Anschläge begrenzt.

Fig. 4 veranschaulicht die Verbindung zweier identische Verbindungsprofile 9 aufweisender Wandelemente 5 miteinander unter Verwendung desselben Verbindungselements, mit welchem gemäß Fig. 1 bis 3 ein Wandelement mit einer Säule verbindbar ist. Die vorstehenden Erläuterungen zu den Fig. 1 bis 3 machen Fig. 4 der Zeichnung ohne weiteres verständlich, so daß auf umfangreiche weitere Erläuterungen verzichtet werden kann. Fig. 4 verdeutlicht den Hintergrund dafür, warum die Nut 11 des Verbindungsprofils 9 zur Aufnahme sowohl des ersten Klemmflansches 2 wie auch des zweiten Klemmflansches 3 des Verbindungselements geeignet ist; denn auf diese Weise lassen sich zwei Wandelemente mit demselben Verbindungselement 1 miteinander verbinden, das gemäß den Fig. 1 bis 3 zur Verbindung eines Wandelements mit einer Säule eingesetzt wird.

Durch die drehfeste, formschlüssige Aufnahme des ersten Klemmflansches 2 des Verbindungselements 1 in der zugeordneten Nut 11 des einen Verbindungsprofils 9 wird bereits sicher ausgeschlossen, daß die beiden miteinander zu verkettenden Wandelemente einen seitlichen Versatz zueinander aufweisen. Indem zusätzlich die beiden einander gegenüberstehenden Verbindungsprofile 9 im Bereich ihrer äußeren Kanten 25 aneinander anliegen, wird auch ein Verschwenken der beiden Wandelemente zueinander um die Achse 12 des zweiten Klemmflansches 3 herum sicher verhindert. Auf diese Weise ist sichergestellt, daß die beiden miteinander verbundenen Wandelemente 5 ohne weitere Einrichtungen exakt zueinander fluchten.

Fig. 4 ist schließlich noch entnehmbar, daß die Erstreckung der Verbindungsprofile 9 quer zur Mittelachse 10 geringer ist als die Dicke der Wandelemente 5. Hierdurch bildet sich im Bereich der Verbindung zweier Wandelemente 5 eine Schattenfuge, die bei Bedarf auch zur Führung von Kabeln oder dgl. Verwendung finden kann.

Die Fig. 5 und 6 veranschaulichen eine Modifikation des vorstehend unter Bezugnahme auf die Fig. 1 bis 4 erläuterten Verbindungselements. Und zwar ist hier der runde Klemmflansch 3 hohl und geschlitzt ausgeführt. Der runde Klemmflansch 3 ist somit gebildet durch zwei einen Hohlraum 28 umschließende Wangen 30, wobei der Hohlraum 28 durch einen zwischen den einander gegenüberstehenden Enden der Wangen 30 bestehenden Spalt 29 nach außen hin geöffnet ist. Die Wangen 30 sind federnd ausgeführt. Zwischen ihnen ist in den Hohlraum 28 ein als abgeflachter Knebel 32 ausgeführtes Spreizelement angeordnet. Der Knebel 32 ist um seine Längsachse herum drehbar, wobei die Verdrehbarkeit durch den Anschlag 33 auf 90° begrenzt ist. Während in der in Fig. 5 gezeigten Stellung des Knebels 32 die Wangen 30 einfedern können, so daß der runde Klemmflansch 3 in abgeflachter Form seitwärts durch die Öffnung 13 hindurch in die Nut 11 eingesetzt werden kann, verhindert der Knebel 32 in seiner in Fig. 6 dargestellten, um 90° gedrehten Stellung ein Zusammendrücken der Wangen 30, so daß zwischen dem Verbindungselement 1 und dem Verbindungsprofil 9 eine feste Verbindung besteht. Dabei spreizt der Knebel 32 sogar die Wangen 30 zur festen, reibschlüssigen Anlage an der Innenwand der Nut 11, so daß die Winkelstellung des Wandelements 5 zur Säule 6 fixiert ist. Im übrigen entspricht die in den Fig. 5 und 6 veranschaulichte Verbindung dem weiter oben erläuterten System gemäß den Fig. 1 bis 3, so daß es an dieser Stelle keiner weiteren Erläuterungen bedarf.

Fig. 7 veranschaulicht die weiter oben unter Bezugnahme auf Fig. 1 bis 3 erläuterte Situation bei Verwendung eines abermals modifizierten Verbindungselements 1'. Gemäß Fig. 7 weist der erste, "unrunde" Klemmflansch 2' einen im wesentlichen runden Querschnitt auf. Er verfügt dabei allerdings über eine seitwärts vorspringende Rippe 26. Zur drehfesten, formschlüssigen, nicht verdrehbaren Aufnahme dieses ersten Klemmflansches 2' verfügt die Nut 15' der Säule 6' über eine korrespondierende Aussparung 27; diese erstreckt sich über denselben Umfangsbereich wie die Rippe 26. Der zweite, runde Klemmflansch 3' weist wiederum eine kreiszylindrische Außenfläche auf, was die Verschwenkbarkeit des Verbindungselements 1' um die Achse 12' des in der Nut 11' des Randprofils 9' aufgenommenen zweiten Klemmflansches 3' herum sicherstellt. Der zweite Klemmflansch 3' weist dabei einen Hohlraum 28 auf. Er ist ferner geschlitzt, so daß der Hohlraum 28 durch einen Spalt 29 nach außen hin geöffnet ist. Im Ergebnis ist somit der zweite Klemmflansch 3' auf zwei federnde Wangen 30 reduziert. Die lichte Weite des Spalts 29 ist dabei größer als die Differenz zwischen dem Durchmesser D des zweiten, runden Klemmflansches 3' und der lichten Weite W der Öffnung 13' der Nut 11' des Verbindungsprofils 9'. Die federnden Wangen 30 des zweiten Klemmflansches 3' lassen sich auf diese Weise um ein solches Maß zusammendrücken, daß der entsprechend flachgedrückte zweite Klemmflansch 3' von der Seite her durch die Öffnung 13' in die Nut 11' eingesetzt werden kann. Ist der zweite Klemmflansch 3' vollständig in die Nut 11' eingetreten, so federn die Wangen 30 wieder in ihre Ausgangsstellung zurück, in welcher sie an der Innenwand der Nut 11' anliegen. In den Hohlraum 28 wird dann ein - nicht dargestelltes - Spreizelement eingeführt, welches die federnden Wangen 30 zur festen Anlage an die Innenwand der Nut 11' vorspannt. Die Nut 11' des Verbindungsprofils 9' verfügt über eine Aussparung 31, die hinsichtlich ihrer Gestalt der Aussparung 27 der Nut 15' der Säule 6' entspricht. Diese dient der Aufnahme der Rippe 26 des unrunden Klemmflansches 2' des Verbindungselements 1' beim Verbinden zweier Wandelemente 5' miteinander.

## Patentansprüche

1. Verbindungselement (1, 1') zur Verbindung zweier Komponenten einer Trennwand, umfassend zwei über einen Verbindungssteg (4, 4') miteinander verbundene Klemmflansche (2, 3; 2', 3'),
**dadurch gekennzeichnet,**
**daß** es asymmetrisch ausgebildet ist, indem die beiden Klemmflansche (2, 3; 2', 3') unterschiedlich gestaltete Querschnitte aufweisen, wobei die Kontur eines ersten Klemmflansches (2, 2') zumindest bereichsweise unrund und die Kontur des anderen, zweiten Klemmflansches (3, 3') zumindest bereichsweise rund ist.

2. Verbindungselement nach Anspruch 1,
**dadurch gekennzeichnet,**
**daß** der erste Klemmflansch (2) einen polygonalen Querschnitt aufweist.

3. Verbindungselement nach Anspruch 2,
**dadurch gekennzeichnet,**
**daß** der erste Klemmflansch (2) hammerförmig ausgebildet ist.

4. Verbindungselement nach einem der Ansprüche 1 bis 3,
**dadurch gekennzeichnet,**
**daß** mindestens der zweite Klemmflansch (3') geschlitzt ist.

5. Verbindungselement nach Anspruch 4,
**dadurch gekennzeichnet,**
**daß** der zweite Klemmflansch (3') einen von zwei federnden Wangen (30) begrenzten Hohlraum (28) aufweist.

6. Verbindungselement nach Anspruch 4 oder Anspruch 5,
**dadurch gekennzeichnet,**
**daß** in den zweiten Klemmflansch (3') ein Spreizelement eingesetzt ist.

7. Verbindungselement nach Anspruch 6,
**dadurch gekennzeichnet,**
**daß** das Spreizelement als verdrehbarer Exzenter ausgebildet ist.

8. Verwendung eines Verbindungselements (1, 1') nach einem der Ansprüche 1 bis 7 zur Verbindung eines Wandelements (5, 5') einer Trennwand mit einer Säule (6, 6'), wobei der eine, erste Klemmflansch (2, 2') des Verbindungselements (1, 1') formschlüssig, drehfest in einer Nut (15, 15') der Säule (6, 6') und der andere, zweite Klemmflansch (3, 3') innerhalb eines vorgegebenen Winkelbereichs um seine Längsachse (12, 12') herum verschwenkbar in einer Nut (11, 11') eines Verbindungsprofils (9, 9') des Wandelements (5, 5') aufgenommen ist.

9. Verwendung nach Anspruch 8,
**dadurch gekennzeichnet,**
**daß** die Säule (6, 6') eine Mehrzahl übereinstimmender Nuten (15, 15') aufweist, die mit einer Teilung von 45° über den Umfang der Säule verteilt angeordnet wird.

10. Verwendung nach einem der Ansprüche 8 oder 9,
**dadurch gekennzeichnet,**
**daß** der vorgegebene Winkelbereich ± 15° bezogen auf die Mittelachse (10, 10') beträgt.

11. Verwendung nach einem der Ansprüche 8 bis 10,
**dadurch gekennzeichnet,**
**daß** die Nut (11, 11') des Verbindungsprofils (9, 9') zur formschlüssigen, drehfesten Aufnahme des ersten Klemmflansches (2, 2') des Verbindungselements (1, 1') geeignet ausgebildet ist.

12. Verwendung nach einem der Ansprüche 8 bis 11,
**dadurch gekennzeichnet,**
**daß** die Säule (6) auf ihrer Außenfläche (17) beidseits einer Öffnung (16) jeder Nut (15) nach außen vorspringende Rippen (18) aufweist.

13. Verwendung nach einem der Ansprüche 8 bis 12,
**dadurch gekennzeichnet,**
**daß** das Verbindungsprofil (9, 9') auf seiner der Säule (6, 6') zugewandten Seite beidseits der Öffnung (13, 13') der Nut (11, 11') konkav gekrümmte Anlageflächen (20, 20') aufweist.

14. Verwendung nach den Ansprüchen 12 und 13,
**dadurch gekennzeichnet,**
**daß** an dem Verbindungsprofil (9) in dem Übergangsbereich von der Öffnung (13) der Nut (11) zu den Anlageflächen (20) Aussparungen (19) für die Rippen (18) vorgesehen sind.

15. Verwendung eines Verbindungselements (1) nach einem der Ansprüche 1 bis 7 zur Verbindung zweier Wandelemente (5) einer Trennwand miteinander, wobei die beiden Wandelemente (5) randseitig aneinander anliegen und einander gegenüberliegende identische Verbindungsprofile (9) aufweisen, wobei ferner der eine, erste Klemmflansch (2) des Verbindungselements (1) formschlüssig, drehfest in einer Nut (11) des Verbindungsprofils (9) des einen Wandelements (5) und der andere, zweite Klemmflansch (3) in einer Nut (11) des Verbindungsprofils (9) des anderen Wandelements aufgenommen ist.

16. Verwendung nach einem der Ansprüche 8 bis 15,
**dadurch gekennzeichnet,**
**daß** die Erstreckung des mindestens einen Verbindungsprofils (9) quer zur Mittelachse (10) geringer ist als Dicke des Wandkörpers (7) des Wandelements (5).

17. Verwendung nach einem der Ansprüche 8 bis 16,
**dadurch gekennzeichnet,**
**daß** das mindestens eine Verbindungsprofil (9) zwei seitlich angeordnete kreuzförmige Nuten (21) zur Aufnahme von Lochschienen aufweist.

18. Verwendung nach einem der Ansprüche 8 bis 17,
**dadurch gekennzeichnet,**
**daß** das Verbindungsprofil (9) eine axiale Vielzweckbohrung (23) aufweist.

19. Verwendung eines Verbindungselements (1') gemäß Anspruch 4 nach einem der Ansprüche 8 bis 18,
**dadurch gekennzeichnet,**
**daß** die lichte Weite des Schlitzes (29) mindestens ebenso groß ist wie die Differenz zwischen dem Durchmesser (D) des runden Klemmflansches (3') und der lichten Weite (W) der Öffnung (13') der Nut (11') des Verbindungsprofils (9') des mindestens einen Wandelements.

## Claims

1. Connecting element (1, 1') for connecting two components of a partition wall, comprising two clamping flanges (2, 3; 2' 3') interconnected by a connecting rod (4, 4'). **characterised in that** it has an asymmetrical configuration due to the fact that the two clamping flanges (2, 3; 2' 3') have different cross sections, whereby the contour of the first clamping flange (2, 2') is at least in some parts un-round and the contour of the other, second clamping flange (3, 3') is at least in some parts round.

2. Connecting element according to Claim 1, **characterised in that** the first clamping flange (2) has a polygonal cross section.

3. Connecting element according to Claim 2, **characterised in that** the first clamping flange (2) is in the shape of a hammer.

4. Connecting element according to one of the Claims 1 to 3, **characterised in that** at least the second clamping flange (3') is slotted.

5. Connecting element according to Claim 4, **characterised in that** the second clamping flange (3') has a hollow space (28) delineated by two resilient jaws (30).

6. Connecting element according to Claim 4 or Claim 5, **characterised in that** an expander is inserted into the second clamping flange (3').

7. Connecting element according to Claim 6, **characterised in that** the expander is configurated in the form of a turnable eccentric.

8. Use of a connecting element (1, 1') according to one of the Claims 1 to 7, for connecting a wall element (5, 5') of a partition wall to a column (6, 6'), whereby the first clamping flange (2, 2') of the connecting element (1, 1') is accommodated in positive engagement against rotation in a groove (15, 15') of the column (6, 6') and the other, second clamping flange (3, 3') is accommodated in a groove (11, 11') of a connection profile (9, 9') of the wall element (5, 5') in such a way that it can be swivelled at its longitudinal axis (12. 12') within a predetermined angular range.

9. Use according to Claim 8, **characterised in that** the column (6, 6') has a large number of grooves (15, 15') with a matching contour, spaced at 45 degrees over the periphery of the column.

10. Use according to one of the Claims 8 or 9, **characterised in that** the predetermined angular swivel range related to the centre axis (10, 10') is +/- 15 degrees.

11. Use according to one of the Claims 8 to 10, **characterised in that** the groove (11, 11') of the connection profile (9, 9') is appropriately configurated to hold the first clamping flange (2, 2') of the connecting element (1, 1') in positive engagement against rotation.

12. Use according to one of the Claims 8 to 11, **characterised in that** the column (6) has ribs (18) protruding outwards on its outside face (17), on both sides of an opening (16) of each groove (15).

13. Use according to one of the Claims 8 to 12, **characterised in that** the connection profile (9, 9') has concave bearing faces (20, 20') on its side facing the column (6, 6'), on both sides of the opening (13, 13') of the groove (11, 11').

14. Use according to Claims 12 and 13, **characterised in that** recesses (19) for the ribs (18) are provided at the connection profile (9), in the transition area from the opening (13) of the groove (11) to the bearing faces (20).

15. Use of a connecting element (1) according to one of the Claims 1 to 7 for connecting together two wall elements (5) of a partition wall, whereby the two wall elements (5) rest against each other with their edges and have identical connection profiles (9) opposite to each other, and whereby, in addition, a first clamping flange (2) of the connecting element (1) is accommodated in positive engagement against rotation in a groove (11) of the connection profile (9) of a wall element (5) and another second clamping flange (3) is accommodated in a groove (11) of the connection profile (9) of the other wall element.

16. Use according to one of the Claims 8 to 15, **characterised in that** at least one connection profile (9) does not extend across the centre axis (10) as far as the thickness of the wall body (7) of the wall element (5).

17. Use according to one of the Claims 8 to 16, **characterised in that** at least one connection profile (9) has, on the side, two grooves (21) with a cruciform section to accommodate perforated bars.

18. Use according to one of the Claims 8 to 17, **characterised in that** the connection profile (9) has an axial multi-purpose bore (23).

19. Use of a connecting element (1') as in Claim 4 according to one of the Claims 8 to 18, **characterised in that** the inside width of the slot (29) is at least as large as the difference between the diameter (D) of the round clamping flange (3') and the inside width (W) of the opening (13') of the groove (11') of the connection profile (9') of at least one of the wall elements.

## Revendications

1. Elément de liaison (1, 1'), pour relier deux éléments d'une cloison, comprenant deux têtes d'assemblage (2, 3 ; 2', 3') qui sont reliées l'une à l'autre par une âme (4, 4'),
**caractérisé en ce qu'**il est dissymétrique, les deux têtes d'assemblage (2, 3 ; 2', 3') présentant des sections transversales avec des conformations différentes, le contour d'une première tête d'assemblage (2, 2') étant au moins partiellement non circulaire, et le contour de l'autre tête d'assemblage (3, 3') étant au moins partiellement circulaire.

2. Elément de liaison selon la revendication 1, **caractérisé en ce que** la première tête d'assemblage (2) présente une section transversale polygonale.

3. Elément de liaison selon la revendication 2, **caractérisé en ce qu'**au moins la première tête d'assemblage (2) a une forme de marteau.

4. Elément de liaison selon une des revendications 1 à 3, **caractérisé en ce qu'**au moins la deuxième tête d'assemblage (3') est fendue.

5. Elément de liaison selon la revendication 4, **caractérisé en ce que** la deuxième tête d'assemblage (3') présente une cavité (28), qui est délimitée par deux joues (30) élastiques.

6. Elément de liaison selon la revendication 4 ou la revendication 5, **caractérisé en ce qu'**un élément expanseur est inséré dans la deuxième tête d'assemblage (3').

7. Elément de liaison selon la revendication 6, **caractérisé en ce que** l'élément expanseur est conformé en excentrique à tourner.

8. Utilisation d'un élément de liaison (1, 1') selon une des revendications 1 à 7 pour relier un élément de cloison (5, 5') d'une cloison à un poteau (6, 6'), la première (2, 2') des têtes d'assemblage de l'élément de liaison (1, 1') étant montée fixe en rotation dans une rainure (15, 15') du poteau (6, 6') et la deuxième (3, 3') des têtes d'assemblage étant montée avec possibilité de pivotement autour de son axe longitudinal (12, 12'), dans les limites d'une plage angulaire prédéterminée, dans une rainure (11, 11') d'un profilé de liaison (9, 9') de l'élément de cloison (5, 5').

9. Utilisation selon la revendication 8, **caractérisée en ce que** le poteau (6, 6') comporte plusieurs rainures (15, 15') adaptées, qui sont réparties sur le pourtour dudit poteau avec un pas de répartition de 45°.

10. Utilisation selon une des revendications 8 ou 9, **caractérisée en ce que** la plage angulaire prédéterminée est de ± 15° rapporté à l'axe médian.

11. Utilisation selon une des revendications 8 à 10, **caractérisée en ce que** la rainure (11, 11') du profilé de liaison (9, 9') est conformée de manière à permettre le montage par complémentarité de formes, fixe en rotation, de la première tête d'assemblage (2, 2') de l'élément de liaison (1, 1').

12. Utilisation selon une des revendications 8 à 11, **caractérisée en ce que** le poteau (6) comporte sur sa surface extérieure (17), de part et d'autre d'une ouverture (16) de chaque rainure (15), des nervures (18) qui font saillie en direction de l'extérieur.

13. Utilisation selon une des revendications 8 à 12, **caractérisée en ce que** le profilé de liaison (9, 9'), sur son côté tourné vers le poteau (6, 6') comporte des surfaces d'appui (20, 20') courbes, concaves, des deux côtés de l'ouverture (13, 13') de la rainure (11, 11').

14. Utilisation selon les revendications 12 et 13, **caractérisée en ce qu'**il est prévu sur le profilé de liaison (9), dans la région de transition entre l'ouverture (13) de la rainure (11) et les surfaces d'appui (20), des échancrures (19) pour les nervures (18).

15. Utilisation d'un élément de liaison (1) selon une des revendications 1 à 7 pour relier entre eux deux éléments de cloison (5) d'une cloison, les deux éléments de cloison (5) étant en contact mutuel au niveau de leur bord et présentant des profilés de liaison (9) identiques mutuellement en vis-à-vis, la première (2) des têtes d'assemblage de l'élément de liaison (1) étant montée avec complémentarité de formes, de manière fixe en rotation, dans une rainure (11) du profilé de liaison (9) de l'un des éléments de cloison (5) et la deuxième (3) tête d'assemblage étant montée dans une rainure (11) d'un profilé de liaison (9) de l'autre élément de cloison.

16. Utilisation selon une des revendications 8 à 15, **caractérisée en ce que** la dimension du profilé de liaison (9), au nombre d'au moins un, transversalement à l'axe médian (10) est inférieure à l'épaisseur du corps (7) de l'élément de cloison (5).

17. Utilisation selon une des revendications 8 à 16, **caractérisée en ce que** le profilé de liaison (9), au nombre d'au moins un, comporte deux rainures latérales (21) en forme de croix pour le montage de rails perforés.

18. Utilisation selon une des revendications 8 à 17, **caractérisée en ce que** le profilé de liaison (9) présente un trou axial (23) polyvalent.

19. Utilisation d'un élément (1') de liaison selon revendication 4, selon une des revendications 8 à 18, **caractérisée en ce que** la section libre de la fente (29) est au moins aussi grande que la différence entre le diamètre (D) de la tête d'assemblage (3') ronde et la section libre (W) de l'ouverture (13') de la rainure (11') dans le profilé de liaison (9') de l'élément de cloison, au nombre d'au moins un.
